# EUROPEAN PATENT SPECIFICATION

(11) **EP 1 707 062 B1**
(45) Date of publication and mention of the grant of the patent: **07.11.2012**
(21) Application number: 04820687.4
(22) Date of filing: 09.12.2004
(51) Int. Cl.: A23L 1/10, A23L 1/105, A23L 1/172, A23L 1/20

(54) **FERMENTED FOOD**
FERMENTIERTES NAHRUNGSMITTEL
ALIMENT FERMENTE

(30) Priority: 22.12.2003 JP 2003424488
(43) Date of publication of application: 04.10.2006
(73) Proprietor: Meiji University, Tokyo 1018301 (JP)
(72) Inventor: KATO, Eihachiro, Tsuzuki-ku, Yokohama-shi, Kanagawa 2240055 (JP); TAKITA, Michiko, Setagaya-ku, Tokyo 1540004 (JP)
(74) Representative: Woods, Geoffrey Corlett
(86) International application number: PCT/JP2004/018352
(87) International publication number: WO 2005/060765

(56) References cited:
- EP-A- 1 304 043
- WO-A1-01/93696
- JP-A- 11 113 513
- JP-A- 2003 088 320
- JP-A- 2003 235 493
- JP-A- 2004 519 238
- US-A- 3 243 301
- US-A1- 2003 161 910
- DATABASE WPI Week 200356 Thomson Scientific, London, GB; AN 2003-595133 XP002531162 & KR 2003 032 655 A (CHO E G) 26 April 2003 (2003-04-26)
- DATABASE EPODOC EUROPEAN PATENT OFFICE, THE HAGUE, NL; XP002531164 & KR 2004 0050208 A (LEE KYU SUP) 16 June 2004 (2004-06-16)
- HACHMEISTER K.A. AND FUNG D.Y.C.: 'Tempeh: A Mold-Modified Indigenous Fermented Food Made from Soybeans and/or Cereal Grains' CRITICAL REVIEWS IN MICROBIOLOGY vol. 19, no. 3, 1993, pages 137 - 188, XP002950448

## Description

### TECHNICAL FIELD

The present invention relates to a fermented food obtainable by fermenting sprouted brown rice, or sprouted brown rice and soybeans, with a Rhizopus mold, wherein said Rhizopus mold is a mold used in the preparation of tempeh, and a method of preparing the fermented food.

### BACKGROUND ART

Tempeh is a traditional fermented food from soybeans which has been eaten for 500 years in Indonesia. Although tempeh is often compared with natto which is also fermented soybeans, tempeh is totally different from natto in appearance. Tempeh has a cake-like appearance in which each soybean is embedded in white hyphae. Tempeh does not have the strong smell and stickiness that natto has, and tempeh retains its cake-like shape even when sliced. Thus, tempeh may be used in various ways as a cooking material.

Tempeh is prepared through fermentation with a Rhizopus mold, which exhibits fermenting ability not only in soybeans but also in other foods. Therefore, foods prepared by fermentation of beans, grains and nuts with a Rhizopus mold (Patent Document 1) and a food prepared by fermentation of adlay with a Rhizopus mold (Patent Document 2) have been known. However, a food prepared by fermentation of sprouted brown rice with a Rhizopus mold has not been known.

On the other hand, as a fermented food using sprouted brown rice, sprouted brown rice-added natto is known (Patent Document 3). However, as described above, tempeh and natto are totally different fermented foods.

(Patent Document 4) describes the manufacture of Korean rice wines using non-steamed germinated brown rice without steam cooking. The method includes a step of inoculating Rhizopus oligosporus into steamed rice to prepare koji. (Patent Document 5) describes a method of producing tempeh by contacting a pre-treated cereal grain substrate or a substrate comprising a cereal grain and soybean grits to the action of the mold Rhizopus oligosporus, NRRL 2710.

(Patent Document 6) describes the solid or semi-solid fermentation of food material wherein the fermentation is conducted with at least one microorganism selected from strains of the genus Lactobacillus, and Rhizopus and combinations thereof. (Patent document 7) describes a method of fermenting brown rice wherein the whole raw brown rice is reacted with an enzyme derived from Aspergillus oryzae and Rhizopus oligosporus and then fermented with a lactic acid bacterium to produce a liquid fermented substance.
(Patent Document 1) Japanese Unexamined Patent Publication No. H11-192065
(Patent Document 2) Japanese Unexamined Patent Publication No. H9-234007
(Patent Document 3) Japanese Unexamined Patent Publication No. 2003-88320
(Patent Document 4) KR-A-20030032655
(Patent Document 5) US-A-3,243,301
(Patent Document 6) EP-A-1 304 043
(Patent Document 7) JP-A-11 113513

### DISCLOSURE OF THE INVENTION

### PROBLEM FOR SOLUTION BY THE INVENTION

Since tempeh is very nutritive and has a variety of uses as a cooking material, it is predicted that demand for tempeh will increase greatly.

The present invention was made under such circumstances. It is an object of the present invention to provide a fermented food which retains the excellent properties of the conventional tempeh and has novel properties added thereto.

### MEANS TO SOLVE THE PROBLEM

As a result of extensive and intensive researches toward the solution of the above problem, the present inventors have prepared a food by fermenting sprouted brown rice with a Rhizopus mold and found that (A) the resultant fermented food contains abundant nutrients derived from sprouted brown rice; (B) the resultant fermented food is almost as hard as soybean tempeh and retains its shape even when sliced; and (C) the resultant fermented food has a sweet taste that soybean tempeh does not have (i.e., its quality is improved in taste). When the present inventors fermented sprouted brown rice and soybeans with a Rhizopus mold, it was found that (D) the resultant food has still better taste than the above fermented food from sprouted brown rice alone. Of these findings, (B), (C) and (D) were found only after the actual preparation of the food, though (A) was predictable before the preparation of the food.

The present invention was achieved based on these findings.

The present invention provides the following (1) to (10).
(1) A fermented food obtainable by fermenting sprouted brown rice with a Rhizopus mold wherein said Rhizopus mold is a mold used in the preparation of tempeh.
(2) A fermented food according to (1) obtainable by fermenting sprouted brown rice and soybeans with said Rhizopus mold.
(3) The fermented food according to (2), wherein the weight ratio of the sprouted brown rice to the soybeans is in a range from 30:70 to 70:30.
(4) The fermented food according to (2) or (3), wherein the food is divided into a part of fermented soybeans and a part of fermented sprouted brown rice, the former being positioned outside and the latter being positioned inside.
(5) A method of preparing a fermented food, comprising inoculating a Rhizopus mold into sprouted brown rice and thereby fermenting the rice, wherein said Rhizopus mold is a mold used in the preparation of tempeh.
(6) A method of preparing a fermented food according to (5), comprising inoculating said Rhizopus mold into sprouted brown rice and soybeans and thereby fermenting the rice and the soybeans.
(7) The method according to (6), wherein the weight ratio of the sprouted brown rice to the soybeans is in a range from 30:70 to 70:30.
(8) The method according to (6) or (7), comprising preparing a mass of soybeans and sprouted brown rice in which the soybeans are positioned outside and the sprouted brown ride is positioned inside, and fermenting the mass with the Rhizopus mold.
(9) The method according to (8), wherein the means to prepare the mass of soybeans and sprouted brown rice is a means which places a layer of the Rhizopus mold-inoculated sprouted brown rice, places upon this layer a layer of the Rhizopus mold-inoculated soybeans, then turns these two layers upside down, and places another layer of the Rhizopus mold-inoculated soybeans upon the layer of the sprouted brown rice which came upside as a result of the turning.
(10) The method according to (8), wherein the means to prepare the mass of soybeans and sprouted brown rice is a means using a device for wrapping bean jam.

Hereinbelow, the present invention will be described in detail.

The fermented food of the present invention is obtainable by fermenting sprouted brown rice with a Rhizopus mold, wherein said Rhizopus mold is a mold used in the preparation of tempeh.

Sprouted brown rice may be a commercial sprouted brown rice. Alternatively, it may be prepared from brown rice. For example, sprouted brown rice may be obtained by placing brown rice in warm water of a specific temperature for 20-30 hours. A commercial sprouted brown rice is prepared by drying the thus obtained brown rice. The brown rice used for this purpose may be either glutinous rice or non-glutinous rice. Brown rice containing both glutinous rice and non-glutinous rice may also be used. Sprouted brown rice is thermally treated together with water or steam (e.g., thermal treatment in a rice cooker) before fermentation. Sprouted brown rice may be cooked in the same manner as sprouted brown rice to be served as meal is cooked. For example, 1.1 to 1.2 volumes of water is added to the sprouted brown rice, which is then left for 1 to 4 hours. Subsequently, the rice is cooked in a commercial rice cooker in the same manner as polished rice is cooked.

A Rhizopus mold is inoculated into the thus cooked, sprouted brown rice. The Rhizopus mold may be a mold commonly used in the preparation of tempeh. For example, a mold belonging to the genus *Rhizopus* may be used. More preferably, *Rhizopus oligosporus* may be used.

The amount of Rhizopus mold to be inoculated is not particularly limited. Usually, an inoculum of 1-5 g, preferably 2-3 g, is used per Kg of cooked sprouted brown rice.

The temperature at the time of fermentation is not particularly limited. Preferably, the temperature is 30-37°C, more preferably 31-32°C.

The fermentation time varies depending on the temperature, the amount of inoculum of Rhizopus mold, etc. When the temperature is 31°C and the amount of inoculum is 2 g per kg of sprouted brown rice, the fermentation time is preferably 20-28 hour, more preferably 22-24 hours.

The fermented food of the present invention may be prepared from sprouted brown rice alone. Alternatively, the fermented food of the present invention may be prepared from sprouted brown rice and soybeans. Although sprouted brown rice and soybeans may be mixed at random, it is preferable to form a mass wherein soybeans are positioned outside and sprouted brown rice is positioned inside. By positioning soybeans and sprouted brown rice in such a manner, the solid product obtainable as a result of fermentation acquires a sufficient strength and also has a favorable appearance. The means to prepare a mass of soybeans and sprouted brown rice is not particularly limited. For example, a means may be given which places a layer of Rhizopus mold-inoculated sprouted brown rice, places upon this layer a layer of Rhizopus mold-inoculated soybeans, then turns these two layers upside down, and places another layer of Rhizopus mold-inoculated soybeans upon the layer of sprouted brown rice which came upside as a result of the turning. Alternatively, such a mass may be prepared using a device for wrapping bean jam.

The mixing ratio of sprouted brown rice to soybeans is not particularly limited. The weight ratio is preferably in a range from 30:70 to 70:30, more preferably in a range from 50:50 to 67:33.

Preferably, soybeans used as a raw material are dipped in an acidic solution and thermally treated together with water or steam (preferably, boiling (thermal treatment at 100°C or below)) before fermentation, in the same manner as in conventional preparation methods of tempeh.

As the acidic solution, an aqueous solution containing an acid (such as acetic acid or lactic acid) or a food containing such an acid (e.g., vinegar) may be used. The amount of the acid or the like to be used is not particularly limited as long as the amount is within a range which is capable of inhibiting the growth of miscellaneous bacteria adhering to the soybeans. For example, when an acidic solution is prepared using common rice vinegar, 50-80 ml of rice vinegar may be added per litter of water. The dipping time in an acidic solution is not particularly limited. Usually, soybeans are dipped for 2-14 hours, preferably for 2-4 hours.

The boiling time of soybeans is also not particularly limited. Usually, soybeans are boiled for 30-60 minutes, preferably for 30-40 minutes.

The Rhizopus mold may be inoculated after sprouted brown rice and soybeans are mixed or appropriately positioned. Alternatively, the Rhizopus mold may be inoculated into sprouted brown rice and soybeans separately, and then these two components may be mixed or positioned appropriately.

The amount of inoculation of Rhizopus mold, fermentation temperature and fermentation time may be decided according to those conditions used for fermentation of sprouted brown rice alone, with appropriate modifications.

### EFFECT OF THE INVENTION

Like the conventional tempeh (soybean tempeh), the fermented food of the invention does not have a strong smell or stickiness, and it retains its cake-like shape even when sliced. In addition to these properties, the fermented food of the invention has nutrients and a flavor which the conventional tempeh does not have. Therefore, the fermented food of the invention is very useful as a novel food.

### BEST MODE FOR CARRYING OUT THE INVENTION

Hereinbelow, the present invention will be described in more detail with reference to the following Examples and Test Examples.

### [EXAMPLE 1]

To 300 g of sprouted brown rice (product name: Hatsuga-Genmai; Distributor: Iki-Iki Club), 1.1 volumes of water is added to the rice. After dipping for about 30 minutes, the rice was cooked according to the conventional manner. The cooked rice was left for about one hour for cooling. Then, 0.6 g of a Rhizopus mold (product name: RAGI tempeh; distributor: Hot Planning Co.) was sprinkled on the rice and mixed. The sprouted brown rice thus inoculated was placed in a plastic bag with small holes and pressed lightly to give a flat sheet-like shape. The resultant rice in a flat sheet-like shape was fermented at 30-35°C for about 20 hours to thereby obtain a sprouted brown rice tempeh.

### [EXAMPLE 2]

Peeled soybeans (variety: Ryuhoh; 250 g) washed with water to remove dirt were dipped for 3 hours in an acidic solution prepared by diluting 50 ml of rice vinegar with 1 litter of water, and then boiled for 30 minutes. The boiling water was discarded, and the boiled soybeans were air-dried for about 2 hours. Sprouted brown rice (500 g) was cooked in the same manner as in Example 1 and then left for about 1 hour for cooling. The Rhizopus mold (1.5 g each) was inoculated into the thus treated soybeans and sprouted brown rice separately by sprinkling and mixing. Then, the soybeans and the sprouted brown rice were mixed so that the soybeans come outside of the resultant mixture. This mixture of soybeans and sprouted brown rice was placed in a plastic bag with small holes and pressed lightly to give a flat sheet-like shape. Then, the mixture was fermented at 30-35°C for about 20 hours to thereby obtain a soybean tempeh with sprouted brown rice.

### [COMPARATIVE EXAMPLE 1]

A brown rice tempeh was prepared in the same manner as in Example 1 except that 300 g of brown rice (variety: Akita-Komachi) was used instead of sprouted brown rice.

### [COMPARATIVE EXAMPLE 2]

Soybeans (200 g) were dipped in water for 14 hours, and sprouted brown rice (200 g) was dipped in water for 2 hours. The dipped soybeans and the dipped sprouted brown rice were mixed and steamed at 121°C for 30 minutes. Then, a liquid containing *Bacillus natto* was sprayed over the steamed mixture, which was transferred into a foamed styrol container and fermented at 40-50°C for 18 hours to thereby obtain a natto with sprouted brown rice.

### [TEST EXAMPLE 1]

For the individual tempeh foods, etc. prepared in the above Examples and Comparative Examples, a sensory test was conducted by a plurality of panelists. The sensory test was conducted for the following seven items: "appearance", "smell", "easy to slice", "easy to handle as a cake-like solid", "easy to wash dishes", "texture" and "taste". For the first five items, the prepared tempeh and other foods were used as they were. For the items "texture" and "taste", the prepared tempeh and other foods were deep fried at 155°C for about 3 minutes before use in the test.

**Table 1. Results of Sensory Test on Various Tempeh Foods, etc.**

| Item | Sprouted brown nce tempeh | | Soybean tempeh with sprouted brown rice | | Brown rice tempeh | | Natto with sprouted brown nce | |
|---|---|---|---|---|---|---|---|---|
| | Judgment (*1) | Score (*2) | Judgment (*1) | Score (*2) | JudgMent (*1) | Score (*2) | JudgMent (*1) | Score (*2) |
| Appearance | ○ | 30 | ○ | 39 | Δ | 26 | Δ | 24 |
| | Covered with thin, white hyphae | | Covered with pure white hyphae | | Covered with xtremely thin hyphae | | Sticky appearance. | |
| Smell | ○ | 32 | ○ | 34 | Δ | 24 | × | 12 |
| | Slightly sweet smell | | Slightly mushroom-like smell | | Slightly musty smell | | Strong smell such as the smell of ammonia | |
| Easy to slice | Δ | 29 | ○ | 37 | × | 11 | × | 10 |
| | Rice grains become slightly loose. | | Rice grains and soybeans are connected with each other forming a cake. So. it is easy to slice. | | Rice grains come out from the cake. | | Rice grains and soybeans are disconnected with each other. Too sticky to slice. | |
| | ○ | 38 | ○ | 39 | Δ | 29 | × | 11 |
| cake-like Easy to handle as a cake-like solid | The cake-like solid is slightly fragile. | | A firm cake. | | The cake-like solid is slightly fragile. | | Does not take a cake-like shape. Rice grains and soybeans are disconnected with each other. Has stick threading. Difficult to handle. | |
| Easy to wash dishes | ⓞ | 40 | ⓞ | 49 | ○ | 39 | × | 11 |
| | Easy to wash | | Easy to wash | | Easy to wash | | Difficult to wash because of stickiness | |
| Texture | ⓞ | 41 | ⓞ | 42 | × | 13 | Δ | 28 |
| | Crispy, comfortable texture | | light touch. eat. | have a Easy to | Hard and bad texture. | | Becomes hard as result of burning. | |
| Taste | ⓞ | 40 | ⓞ | 45 | Δ | 25 | Δ | 29 |
| | Has a sweet taste. | | Sweet and tasty without flavoring. | | Rather tasteless | | Bitter and has a strong smell | |

| | | | | | | | | |
|---|---|---|---|---|---|---|---|---|
| *1 Judgment ⓞ: score 40-50 ○: score 30-39 Δ: score 20-29 ×: score 10-19 *2 Score Total of 5-grade evaluations made by 10 panelists. 5-grade evaluation: 5 Very good 4 Good 3 Neutral 2 Slightly bad 1 Bad | | | | | | | | |

As shown in Table 1, sprouted brown rice tempeh and soybean tempeh with sprouted brown rice obtained higher scores in almost all items than brown rice tempeh. Natto with sprouted brown rice had the smell of ammonia when compared with soybean tempeh with sprouted brown rice. Since this natto did not form a cake-like shape, it was impossible to slice. Thus, natto with sprouted brown rice exhibited properties totally different from those of sprouted brown rice tempeh or the like.

### [TEST EXAMPLE 2]

Component analysis was conducted on sprouted brown rice tempeh and soybean tempeh with sprouted brown rice. For the purpose of comparison, a similar component analysis was also conducted on sprouted brown rice, steamed soybeans and soybean tempeh.

### (1) General Analysis

Various tempeh and other foods were freeze-dried and subjected to analysis. In general analysis, moisture contents were analyzed by heat drying; proteins were analyzed by Kjeldahl method; lipids were analyzed by Soxhlet extraction; sugars were analyzed by the subtraction method; dietary fiber was analyzed by the enzymatic-gravimetric method; and ash was analyzed by the ashing method. The results are shown in Table 2.

**Table 2. Results of General Analysis of Various Tempeh Foods, etc.¹⁾**

| | Sprouted brown rice | Sprouted brown rice tempeh | Steamed soybeans | Soybean tempeh | Soybean tempeh with sprouted brown rice |
|---|---|---|---|---|---|
| Moisture content | 1.6 | 0.7 | 3.4 | 2.7 | 0.6 |
| Protein | 7.9 | 8.1 | 48.1 | 48 | 29.6 |
| Lipid | 2 | 4.1 | 24.5 | 22.3 | 12.6 |
| Sugar | 80 | 78.3 | 3.4 | 5.6 | 41.4 |
| Dietary fiber | 7.5 | 7.7 | 17.4 | 18.2 | 13.5 |
| Ash | 1.1 | 1.1 | 3.2 | 3.2 | 2.2 |

| | | | | | |
|---|---|---|---|---|---|
| Numeric values in the Table represent ratios (%) of individual components contained in samples. | | | | | |

As shown in the Table, while about 80% of sprouted brown rice was starch (sugar), about 50% was protein in soybeans. Further, when sprouted brown rice and soybeans were processed into tempeh foods by fermentation, no major change was observed in the results of general analysis.

Soybean tempeh with sprouted brown rice containing both sprouted brown rice tempeh (rich in sugars) and soybean tempeh (rich in proteins) is a food containing well-balanced sugars and proteins.

### (2) Free Amino Acid Analysis

Free amino acids contained in various tempeh and other foods were analyzed. This analysis was conducted by Japan Food Research Laboratories upon request of the present inventors. The results are shown in Table 3.

**Table 3. Results of Free Amino Acid Analysis in Various Tempeh Foods, etc.¹⁾²⁾**

| | Sprouted brown rice | Sprouted brown rice tempeh | Steamed soybeans | Soybean tempeh | Soybean tempeh with sprouted brown rice |
|---|---|---|---|---|---|
| Total free amino acid | 24 | 27 | 158 | 1091 | 464 |
| Free arginine | 6 | | 71 | 136 | 54 |
| Free lysine | | | 6 | 159 | 69 |
| Free histidine | | | 6 | 74 | 37 |
| Free phenylalanine | | | 4 | 29 | 13 |
| Free tyrosine | | | 3 | 61 | 27 |
| Free leucine | | | 4 | 17 | 8 |
| Free isoleucine | | | 2 | 10 | 4 |
| Free methionine | | | 2 | 3 | |
| Free valine | | | 3 | 19 | 11 |
| Free alanine | 10 | 21 | 9 | 220 | 82 |
| Free glycine | | | 3 | 27 | 14 |
| Free proline | | | 2 | 31 | 10 |
| Free glutamic acid | 8 | 6 | 17 | 162 | 64 |
| Free serine | | | 3 | 44 | 19 |
| Free threonine | | | 1 | 45 | 24 |
| Free aspartic acid | | | 10 | 35 | 18 |
| Free tryptophan | | | 12 | 4 | 2 |
| Free cysteine | | | | 15 | 8 |

| | | | | | |
|---|---|---|---|---|---|
| ¹⁾ Numeric values in the Table represent the amounts of free amino acids (unit: mg) contained in 100 g samples. ²⁾ Empty columns in the Table represent that the amounts of free amino acids were below the detection limit. | | | | | |

As shown in the Table, free amino acids are contained in only small amounts in sprouted brown rice, and these amounts increased little when sprouted brown rice was fermented. On the other hand, free amino acids in soybeans increased by fermentation. Among all, increase of tasteful glutamic acid was remarkable. The amount of total free amino acid in soybean tempeh with sprouted brown rice located at the middle of those amounts in sprouted brown rice tempeh and soybean tempeh.

### (3) Analysis of Free γ-Aminobutyric Acid

Free γ-aminobutyric acid (GABA) contained in various tempeh foods, etc. was analyzed. This analysis was conducted by Japan Food Research Laboratories upon request of the present inventors. The results are shown in Table 4.

**Table 4. Results of Analysis of Free γ-Aminobutyric Acid in Various Tempeh Foods, etc.¹⁾²⁾**

| | Sprouted brown rice | Sprouted brown rice tempeh | Steamed soybeans | Soybean tempeh | Soybean tempeh with sprouted brown rice |
|---|---|---|---|---|---|
| Amount of Free γ-Aminobutyric Acid | 12 | | 6 | 39 | 16 |

| | | | | | |
|---|---|---|---|---|---|
| ¹⁾ Numeric values in the Table represent the amounts of free γ-aminobutyric acid (unit: mg) contained in 100 g samples. ²⁾ The empty column in the Table represents that the amount of free γ-aminobutyric acid was below the detection limit. | | | | | |

As shown in the Table, the free γ-aminobutyric acid in sprouted brown rice decreased to a level below the detection limit by fermentation. On the other hand, the amount of free γ-aminobutyric acid in soybeans increased 6 times or more by fermentation. The amount of freey-aminobutyric acid in soybean tempeh with sprouted brown rice located at the middle of those amounts in sprouted brown rice tempeh and soybean tempeh.

### (4) Isoflavone Analysis

Isoflavones contained in tempeh with sprouted brown rice, etc. were analyzed. This analysis was conducted by Food & Environmental Science Research Center upon request of the present inventors. The results are shown in Table 5. Since soybean isoflavones are not contained in sprouted brown rice and sprouted brown rice tempeh, these two foods were excluded from the analysis.

**Table 5. Results of Isoflavone Analysis in Various Tempeh Foods, etc.¹⁾**

| | Steamed soybeans | Soybean tempeh | Soybean tempeh with sprouted brown rice |
|---|---|---|---|
| Total isoflavone | 117.1 | 84 | 35.1 |
| Daizin | 32.1 | 11.2 | 6.3 |
| Genistin | 56.2 | 27 | 13.7 |
| Daizein | 23.4 | 29.6 | 10.1 |
| Genistein | 5.5 | 16.3 | 5.1 |

| | | | |
|---|---|---|---|
| ¹⁾Numeric values in the Table represent the amounts of isoflavone (unit: mg) contained in 100 g samples. | | | |

As shown in the Table, more than 50% of the glycoside-type isoflavones (daizin and genistin) contained in steamed soybeans changed to aglycone-type isoflavones (daizein and genistein) by fermentation. Soybean tempeh with sprouted brown rice contained less isoflavone than soybean tempeh.

### (5) Analysis of Free Sugars

Free sugars contained in various tempeh foods, etc. were analyzed. This analysis was conducted by HPLC. The results are shown in Table 6.

**Table 6. Results of Free Sugar Analysis in Various Tempeh Foods, etc.¹⁾²⁾**

| | Sprouted brown rice | Sprouted brown rice tempeh | Steamed soybeans | Soybean tempeh | Soybean tempeh with sprouted brown rice |
|---|---|---|---|---|---|
| Glucose | 0.13 | 1.74 | 1.17 | 0.57 | 1.93 |
| Fructose | | | 0.23 | 0.35 | 0.22 |
| Sucrose | 0.13 | 0.31 | 0.92 | 2.26 | 1.24 |

| | | | | | |
|---|---|---|---|---|---|
| ¹⁾Numeric values in the Table represent the amounts of free sugar (unit: g) contained in 100 g samples. ²⁾Empty columns in the Table represent that the amounts of free sugar were below the detection limit. | | | | | |

As shown in the Table, the free sugars detected only in trace amounts in sprouted brown rice increased remarkably by fermentation. In soybean tempeh, while sucrose showed an increase, reducing sugars (fructose and glucose) showed a slight increase and a decrease, respectively. It is known that a part of reducing sugars in soybeans is consumed by fermentation, but oligosaccharides (stachyose and raffinose) therein are degraded to yield sucrose or the like by fermentation. It is believed that the above-mentioned increase of sucrose is a result of such degradation of oligosaccharides. The amounts of free sugar and free reducing sugar were largest in soybean tempeh with sprouted brown rice, exceeding those amounts in sprouted brown rice tempeh and soybean tempeh.

From the results described in (1) to (5) above, it is understood that the reducing sugar in sprouted brown rice increases by fermentation and that fermented sprouted brown rice becomes edible without flavoring. Soybean tempeh with sprouted brown rice contains well-balanced sugars and proteins, has fine taste of amino acids and sweetness of reducing sugars, and also contains γ-aminobutyric acid and isoflavones. Thus, soybean tempeh with sprouted brown rice can be said a characteristic food.

## Claims

1. A fermented food obtainable by fermenting sprouted brown rice with a Rhizopus mold, wherein said Rhizopus mold is a mold used in the preparation of tempeh.

2. A fermented food according to claim 1 obtainable by fermenting sprouted brown rice and soybeans with said Rhizopus mold.

3. The fermented food according to claim 2, wherein the weight ratio of the sprouted brown rice to the soybeans is in a range from 30:70 to 70:30.

4. The fermented food according to claim 2 or 3, wherein the food is divided into a part of fermented soybeans and a part of fermented sprouted brown rice, the former being positioned outside and the latter being positioned inside.

5. A method of preparing a fermented food, comprising inoculating a Rhizopus mold into sprouted brown rice and thereby fermenting the rice, wherein said Rhizopus mold is a mold used in the preparation of tempeh.

6. A method of preparing a fermented food according to claim 5, comprising inoculating said Rhizopus mold into sprouted brown rice and soybeans and thereby fermenting the rice and the soybeans.

7. The method according to claim 6, wherein the weight ratio of the sprouted brown rice to the soybeans is in a range from 30:70 to 70:30.

8. The method according to claim 6 or 7, comprising preparing a mass of soybeans and sprouted brown rice in which the soybeans are positioned outside and the sprouted brown ride is positioned inside, and fermenting the mass with the Rhizopus mold.

9. The method according to claim 8, wherein the means to prepare the mass of soybeans and sprouted brown rice is a means which places a layer of the Rhizopus mold-inoculated sprouted brown rice, places upon this layer a layer of the Rhizopus mold-inoculated soybeans, then turns these two layers upside down, and places another layer of the Rhizopus mold-inoculated soybeans upon the layer of the sprouted brown rice which came upside as a result of the turning.

10. The method according to claim 8, wherein the means to prepare the mass of soybeans and sprouted brown rice is a means using a device for wrapping bean jam.

## Patentansprüche

1. Fermentiertes Lebensmittel, erhältlich durch Fermentieren von gekeimtem braunem Reis mit einem Rhizopus-Schimmel, wobei der Rhizopus-Schimmel ein Schimmel ist, der in der Herstellung von Tempeh verwendet wird.

2. Fermentiertes Lebensmittel nach Anspruch 1, erhältlich durch Fermentieren von gekeimtem braunem Reis und Sojabohnen mit dem Rhizopus-Schimmel.

3. Fermentiertes Lebensmittel nach Anspruch 2, wobei das Gewichtsverhältnis des gekeimten braunen Reis zu den Sojabohnen in einem Bereich von 30:70 bis 70:30 liegt.

4. Fermentiertes Lebensmittel nach Anspruch 2 oder 3, wobei das Lebensmittel in einen Teil von fermentierten Sojabohnen und einen Teil von fermentiertem gekeimtem braunem Reis unterteilt ist, wobei das Erstere außen positioniert ist und das Letztere innen positioniert ist.

5. Verfahren zum Herstellen eines fermentierten Lebensmittels, umfassend das Animpfen eines Rhizopus-Schimmels in gekeimten braunen Reis und dadurch Fermentieren des Reis, wobei der Rhizopus-Schimmel ein Schimmel ist, der in der Herstellung von Tempeh verwendet wird.

6. Verfahren zum Herstellen eines fermentierten Lebensmittels nach Anspruch 5, umfassend das Animpfen des Rhizopus-Schimmels in gekeimten braunen Reis und Sojabohnen, und dadurch Fermentieren des Reis und der Sojabohnen.

7. Verfahren nach Anspruch 6, wobei das Gewichtsverhältnis des gekeimten braunen Reis zu den Sojabohnen in einem Bereich von 30:70 bis 70:30 liegt.

8. Verfahren nach Anspruch 6 oder 7, umfassend das Herstellen einer Masse von Sojabohnen und gekeimtem braunem Reis, in der die Sojabohnen außen positioniert sind und der gekeimte braune Reis innen positioniert ist, und Fermentieren der Masse mit dem Rhizopus-Schimmel.

9. Verfahren nach Anspruch 8, wobei das Mittel, um die Masse von Sojabohnen und gekeimten braunem Reis herzustellen, ein Mittel ist, das eine Schicht des mit Rhizopus-Schimmel angeimpften gekeimten braunen Reis platziert, auf diese Schicht eine Schicht des mit Rhizopus-Schimmel angeimpften Sojabohnen platziert, dann diese zwei Schichten auf den Kopf dreht, und eine andere Schicht der mit Rhizopus-Schimmel angeimpften Sojabohnen auf die Schicht des gekeimten braunen Reis, der als ein Ergebnis des Drehens nach oben kam, platziert.

10. Verfahren nach Anspruch 8, wobei das Mittel, um die Masse von Sojabohnen und gekeimtem braunem Reis herzustellen, ein Mittel ist, das eine Vorrichtung zum Umhüllen von Bohnenmus ist.

## Revendications

1. Aliment fermenté pouvant être obtenu par la fermentation de riz brun germé avec une moisissure de Rhizopus, où ladite moisissure de Rhizopus est une moisissure utilisée dans la préparation d'un tempeh.

2. Aliment fermenté selon la revendication 1, pouvant être obtenu par la fermentation de riz brun germé et de graines de soja avec ladite moisissure de Rhizopus.

3. Aliment fermenté selon la revendication 2, dans lequel le rapport en poids de riz brun germé sur les graines de soja est dans une plage comprise entre 30:70 et 70:30.

4. Aliment fermenté selon la revendication 2 ou 3, où l'aliment est divisé en une partie de graines de soja fermentées et en une partie de riz brun germé fermenté, la première étant placée à l'extérieur et la deuxième étant placée à l'intérieur.

5. Procédé pour préparer un aliment fermenté, qui consiste à inoculer une moisissure de Rhizopus dans du riz brun germé et ainsi fermenter le riz, où ladite moisissure de Rhizopus est une moisissure utilisée dans la préparation d'un tempeh.

6. Procédé pour préparer un aliment fermenté selon la revendication 5, qui consiste à inoculer ladite moisissure de Rhizopus dans du riz brun germé et des graines de soja, et ainsi fermenter le riz et les graines de soja.

7. Procédé selon la revendication 6, dans lequel le rapport en poids du riz brun germé sur les graines de soja est dans une plage comprise entre 30:70 et 70:30.

8. Procédé selon la revendication 6 ou 7, qui consiste à préparer une masse de graines de soja et de riz brun germé dans laquelle les graines de soja sont placées à l'extérieur et le riz brun germé est placé à l'intérieur, et à fermenter la masse avec la moisissure de Rhizopus.

9. Procédé selon la revendication 8, dans lequel le moyen pour préparer la masse de graines de soja et de riz brun germé est un moyen qui place une couche de riz brun germé inoculé avec la moisissure de Rhizopus, place sur cette couche une couche de graines de soja inoculées avec la moisissure de Rhizopus, puis retourne ces deux couches, et place une autre couche de graines de soja inoculées avec la moisissure de Rhizopus sur la couche de riz brun germé qui s'est retrouvée sur le dessus suite au retournement.

10. Procédé selon la revendication 8, dans lequel le moyen pour préparer la masse de graines de soja et de riz brun germé est un moyen qui utilise un dispositif pour envelopper une purée de haricots.
